(19) Europäisches Patentamt — European Patent Office — Office européen des brevets

(11) **EP 2 134 652 B1**

(12) **EUROPÄISCHE PATENTSCHRIFT**

(45) Veröffentlichungstag und Bekanntmachung des Hinweises auf die Patenterteilung:
**27.05.2015 Patentblatt 2015/22**

(21) Anmeldenummer: **08734734.0**

(22) Anmeldetag: **22.03.2008**

(51) Int Cl.:
***C01F 11/18*** *(2006.01)* ***C08K 3/26*** *(2006.01)*

(86) Internationale Anmeldenummer:
**PCT/EP2008/002321**

(87) Internationale Veröffentlichungsnummer:
**WO 2008/122358 (16.10.2008 Gazette 2008/42)**

(54) **KUGELFÖRMIGE CALCIUMCARBONAT-TEILCHEN**

SPHERICAL CALCIUM CARBONATE PARTICLES

PARTICULES SPHÉRIQUES DE CARBONATE DE CALCIUM

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.04.2007 DE 102007016580**
**21.04.2007 DE 102007018975**

(43) Veröffentlichungstag der Anmeldung:
**23.12.2009 Patentblatt 2009/52**

(73) Patentinhaber: **Schaefer Kalk GmbH & Co. KG**
**65582 Diez (DE)**

(72) Erfinder:
 • **VUCAK, Marijan**
 **65624 Altendiez (DE)**
 • **GORNA, Katarzyna**
 **PL-95-200 Pabianice (PL)**
 • **WEGNER, Gerhard**
 **55127 Mainz (DE)**

(74) Vertreter: **Mai, Dörr, Besier**
 **Patentanwälte**
 **Steuerberater/Wirtschaftsprüfer**
 **Kreuzberger Ring 64**
 **65205 Wiesbaden (DE)**

(56) Entgegenhaltungen:
**WO-A2-2004/052784 US-A- 4 714 603**
**US-A1- 2004 234 443**

 • **FAATZ, MICHAEL: "Kontrollierte Fällung von amorphem Calciumcarbonat durch homogene Carbonatfreisetzung" DISSERTATION, JOHANNES GUTENBERG-UNIVERSITÄT MAINZ, FACHBEREICH 09: CHEMIE, PHARMAZIE UND GEOWISSENSCHAFT, [Online] 2005, XP002512768 MAINZ, URN(NBN):77-9140 Gefunden im Internet: URL:http://deposit.d-nb.de/cgi-bin/dokserv ?idn=977855961&dok_var=d1&dok_ext=pdf&file name=977855961.pdf> [gefunden am 2009-01-30] in der Anmeldung erwähnt**
 • **ANONYMOUS: "CALCIUM CARBONATE" ALDRICH CATALOGUE, HANDBOOK OF FINE CHEMICALS,, 1. Januar 2000 (2000-01-01), Seite 340, XP002296103**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft kugelförmige Calciumcarbonat-Teilchen, Verfahren zu ihrer Herstellung sowie ihre Verwendung.

Calciumcarbonat, $CaCO_3$, ist ein Calcium-Salz der Kohlensäure, das heutzutage in vielen Bereichen des täglichen Lebens Anwendung findet. So wird es insbesondere als Additiv oder Modifizierungsmittel in Papier, Farben, Kunststoffen, Tinten, Klebstoffen und Pharmazeutika eingesetzt. In Kunststoffen dient Calciumcarbonat vorrangig als Füllstoff, um das vergleichsweise teure Polymer zu ersetzen.

In der Natur tritt Calciumcarbonat in verschiedenen Phasen in Erscheinung. Prinzipiell wird zwischen den wasserhaltigen und den wasserfreien Phasen differenziert. Calcit, Vaterit und Aragonit sind Strukturen ohne Einlagerung von Wasser und weisen die gleiche Stöchiometrie auf (Polymorphie). Des Weiteren existieren zwei kristalline Hydratphasen von Calciumcarbonat: Das Monohydrat und ein Hexahydrat (Ikait).

Neben den kristallinen Formen ist auch amorphes Calciumcarbonat (ACC) bekannt. ACC ist eine metastabile Phase, welche mit variablem Wassergehalt auftritt und bei welcher die Atome keine geordneten Strukturen, sondern ein unregelmäßiges Muster ausbilden und daher nur über eine Nahordnung, nicht aber über eine Fernordnung verfügen. ACC ist instabil und wandelt sich bei Temperaturen oberhalb von 300°C in Calcit um. Durch die Gegenwart von Wasser wird dieser Prozess beschleunigt und die Kristallisation findet schon bei niedrigeren Temperaturen statt.

ACC kann ausgehend von vielen, verschiedenen Ausgangsmaterialien unter vielen, verschiedenen Reaktionsbedingungen hergestellt werden, z. B. aus einer Calciumchlorid-Lösung, die mit Natriumhydrogencarbonat in der Gegenwart von Magnesiuinionen, mit Ammoniumcarbonat oder mit Natriumcarbonat umgesetzt wird, oder durch Hydrolyse von Dimethylcarbonat in einer Calciumchlorid-Lösung.

Die letzte Route wird insbesondere in der Dissertation M. Faatz "Kontrollierte Fällung von amorphem Calciumcarbonat durch homogene Carbonatfreisetzung" Johannes Gutenberg-Universität Mainz 2005 diskutiert, wobei zwei Synthesevarianten genauer untersucht werden:

Zum einen werden in 100 ml wässriger Lösung 0,001 mol Calciumchlorid mit 0,001 mol Dimethylcarbonat in Gegenwart von 0,002 mol Natriumhydroxid umgesetzt. Alternativ werden in 100 ml wässriger Lösung 0,001 mol Calciumchlorid mit 0,005 mol Dimethylcarbonat in Gegenwart von 0,010 mol Natriumhydroxid zur Reaktion gebracht. Die erhaltenen Niederschläge werden jeweils abgetrennt und getrocknet, wobei genauere Angaben zur Trocknung fehlen. Beide Wege führen zu mehr oder weniger kugelförmigen amorphen Calciumcarbonat-Teilchen, die einen Restwassergehalt von 0,4 mol bis 0,6 mol eingelagertes Wasser, bezogen auf 1 mol Calciumcarbonat, bzw. von 7 Gew.-% bis 10 Gew.-% Wasser, bezogen auf das Gesamtgewicht, aufweisen.

Im Rahmen dieser Arbeit wurde auch die Eignung der ACC-Partikel als Füllstoff in ultrahochmolekularen Polyethylen (UHMW-PE) untersucht, wobei die Partikel zur Vermeidung von Kettenspaltungen in situ in den wachsenden Polymerketten dispergiert wurden. Die auf diese Weise erhaltenden gefüllten Polymere besitzen einen Schmelzpeak im Bereich von 137°C bis 139°C, der kleiner als der des reinen UHMW-PE (146°C) ist.

Vor diesem Hintergrund lag der vorliegenden Erfindung die Aufgabe zugrunde, Möglichkeiten zur Bereitstellung von Calciumcarbonat-Teilchen mit verbesserten Eigenschaften aufzuzeigen. Insbesondere sollten sich die Calciumcarbonat-Teilchen als Füllstoff für Polymere eignen, wobei insbesondere die mechanischen Eigenschaften der Polymere durch den Zusatz des Füllstoffs möglichst nicht nachteilig beeinflusst, sondern nach Möglichkeit noch weiter verbessert werden sollten. Gleichzeitig sollten die Füllstoffe auf möglichst einfache Art und Weise, möglichst großtechnisch und kostengünstig herstellbar sein.

Gelöst werden diese sowie weitere nicht konkret genannten Aufgaben, die sich aus den obigen Zusammenhängen direkt ableiten lassen, durch die Bereitstellung von kugelförmigen Calciumcarbonat-Teilchen mit allen Merkmalen des vorliegenden Anspruchs 1. Die auf Anspruch 1 rückgezogenen Unteransprüche beschreiben besonders zweckmäßige Varianten der kugelförmigen Calciumcarbonat-Teilchen. Die übrigen Ansprüche betreffen besonders vorteilhafte Herstellungsverfahren für die erfindungsgemäßen kugelförmigen Calciumcarbonat-Teilchen und stellen besonders zweckmäßige Anwendungen der erfindungsgemäßen kugelförmigen Calciumcarbonat-Teilchen unter Schutz.

Durch die Bereitstellung von kugelförmigen Calciumcarbonat-Teilchen mit einem mittleren Teilchendurchmesser im Bereich von 0,05 $\mu$m bis 1,75 $\mu$m und einem Wassergehalt von höchstens 5,0 Gew.-%, bezogen auf ihr Gesamtgewicht, wobei

- der Anteil von kristallinem Calciumcarbonat kleiner 90 Gew.-% ist und
- die Calciumcarbonat-Teilchen durch ein Verfahren erhältlich sind, bei welchem man

i) Calciumchlorid mit Dialkylcarbonat in Gegenwart eines Alkalimetallhydroxyds in wässriger Lösung umsetzt, wobei man die Komponenten in folgenden Konzentrationen einsetzt:

| | |
|---|---|
| a) $CaCl_2$: | 15 mmol/l bis 45 mmol/l; |
| b) Dialkylcarbonat: | 15 mmol/l bis 45 mmol/l; |

(fortgesetzt)

c) Alkalimetallhydroxid:     20 m/mol/l bis 50 mmol/l

ii) das erhaltene Produkt abtrennt und trocknet, gelingt es auf nicht ohne weiteres vorhersehbare Weise kugelförmige Calciumcarbonat-Teilchen mit verbessertem Eigenschaftsprofil und erhöhter Langzeitstabilität zugänglich zu machen, die sich insbesondere als Füllstoff für Polymere eignen, da sie auf einfachste Art und Weise äußerst homogen im Polymer dispergiert werden können. Die resultierenden Polymercompounds zeichnen sich durch ein deutlich verbessertes Eigenschaftsspektrum aus und weisen insbesondere wesentlich verbesserte mechanische Eigenschaften, wie eine höhere Zugfestigkeit, ein höheres Zugmodul und eine höhere Reißdehnung, sowie eine deutlich glattere Oberfläche auf.

Darüber hinaus ergeben sich durch die erfindungsgemäße Lösung noch zahlreiche weitere Vorteile:

Die erfindungsgemäßen kugelförmigen Calciumcarbonat-Teilchen können auf vergleichsweise einfache Art und Weise großtechnisch und kostengünstig hergestellt werden.

Durch das rasche und gleichzeitig überaus schonende Herstellungsverfahren der vorliegenden Erfindung gelingt es überraschenderweise kugelförmige Calciumcarbonat-Teilchen mit einem Wassergehalt kleiner 5,0 Gew.-% zugänglich zu machen. Dies war insbesondere deshalb nicht zu erwarten, weil amorphes Calciumcarbonat an sich sehr instabil ist und sich bei hohen Temperaturen normalerweise in Calcit umwandelt, wobei diese Umwandlung durch die Gegenwart von Wasser noch beschleunigt wird.

Die erfindungsgemäßen Calciumcarbonat-Teilchen sind isotrop und besitzen eine sehr regelmäßige und kugelförmige Gestalt sowie eine vergleichsweise enge Teilchengrößenverteilung. Die Bildung von größeren Aggregaten wird nicht beobachtet, vielmehr liegen die erfindungsgemäßen Teilchen überwiegend einzelteilig vor. Hieraus ergeben sich zahlreiche Vorteile in den Anwendungen, wie eine gleichmäßigere Dispergierbarkeit, eine bessere Verarbeitbarkeit und eine verbesserte Mechanik und Oberflächenbeschaffenheit von mit erfindungsgemäßen Calciumcarbonat-Teilchen gefüllten Polymeren.

Die Calciumcarbonat-Teilchen der vorliegenden Erfindung sind vergleichsweise form- und eigenschaftsstabil und daher hervorragend für die thermoplastische Einarbeitung in Kunststoffe, z. B. durch Extrusion, geeignet. Im Gegensatz dazu ist eine thermoplastische Verarbeitung des amorphen Calciumcarbonats von Faatz aufgrund der großen Mengen an Strukturwasser und der daraus resultierenden Instabilität der Teilchen nahezu unmöglich.

Die vorliegende Erfindung betrifft kugelförmige Calciumcarbonat-Teilchen. Im Unterschied zu anderen bekannten Formen des Standes der Technik sind die Calciumcarbonat- Teilchen also nicht z. B. aus Nadeln, Rhomboedern bzw. Somatoiden (gefälltes Calciumcarbonat; PCC) oder aus unregelmäßig geformten Teilchen (gemahlenes Calciumcarbonat; GCC), sondern aus kugelförmigen Teilchen aufgebaut, die vorzugsweise überwiegend einzelteilig vorliegen. Es werden jedoch kleinere Abweichungen von der perfekten Kugelform akzeptiert, solange die Eigenschaften der Teilchen, insbesondere ihre Dispergierbarkeit, nicht grundlegend verändert werden. So kann die Oberfläche der Teilchen gelegentliche Fehlstellen oder zusätzliche Ablagerungen aufweisen.

Der mittlere Durchmesser der Calciumcarbonat-Teilchen ist 0,05 $\mu$m bis 1,75 $\mu$m, besonders bevorzugt kleiner 1,5 $\mu$m, insbesondere kleiner 1,2 $\mu$m. Weiterhin ist der mittlere Teilchendurchmesser günstigerweise größer 0,1 $\mu$m, vorzugsweise größer 0,2 $\mu$m, insbesondere größer 0,3 $\mu$m. Er wird zweckmäßigerweise durch Auswertung von REM-Aufnahmen ermittelt, wobei vorzugsweise nur Teilchen mit einer Größe von mindestens 0,01 $\mu$m berücksichtigt werden und ein Zahlenmittel über vorzugsweise mindestens 20, besonders bevorzugt mindestens 40 Teilchen gebildet wird.

Die Größenverteilung der Teilchen ist vergleichsweise eng und vorzugsweise derart, dass mindestens 90,0 Gew.-% aller Calciumcarbonat-Teilchen einen Teilchendurchmesser im Bereich von mittlerer Teilchendurchmesser -30 % bis mittlerer Teilchendurchmesser +30 % aufweisen.

Der Formfaktor der Teilchen, vorliegend definiert als der Quotient aus minimalem Teilchendurchmesser und maximalem Teilchendurchmesser, ist zweckmäßigerweise für mindestens 90 %, günstigerweise für mindestens 95 % aller Teilchen größer 0,90, besonders bevorzugt größer 0,95. In diesem Zusammenhang werden vorzugsweise nur Teilchen mit einer Teilchengröße im Bereich von 0,1 $\mu$m bis 2,0 $\mu$m berücksichtigt.

Die erfindungsgemäßen Calciumcarbonat-Teilchen zeichnen sich weiterhin durch einen vergleichsweise geringen Wassergehalt aus. Sie weisen, bezogen auf ihr Gesamtgewicht, einen Wassergehalt (Restfeuchte bei 105°C) von höchstens 5,0 Gew.-%, vorzugsweise von höchstens 2,5 Gew.-%, bevorzugt von höchstens 1,0 Gew.-%, besonders bevorzugt von höchstens 0,75 Gew.-%, noch mehr bevorzugt von höchstens 0,5 Gew.-%, insbesondere von höchstens 0,4 Gew.-%, auf.

Die spezifische Oberfläche der Calciumcarbonat-Teilchen liegt vorzugsweise im Bereich von 2 m²/g bis 20 m²/g, besonders bevorzugt im Bereich von 4 m²/g bis 12 m²/g.

Im Rahmen einer ersten besonders bevorzugten Ausführungsform der vorliegenden Erfindung sind die Calciumcarbonat-Teilchen zumindest teilweise amorph. Der Begriff "amorph" bezeichnet in diesem Zusammenhang solche Calciumcarbonat-Modifikationen, bei welchen die Atome zumindest teilweise keine geordneten Strukturen, sondern ein unregelmäßiges Muster ausbilden und daher nur über eine Nahordnung, nicht aber über eine Fernordnung verfügen. Hiervon zu unterscheiden sind kristalline Modifikationen des Calciumcarbonats, wie z. B. Calcit, Vaterit und Aragonit, bei welchen die Atome sowohl eine Nah- als auch eine Fernordnung aufweisen. Vorliegend wird die Gegenwart von kristallinen Bestandteilen jedoch nicht kategorisch ausgeschlossen. Erfindungsgemäß Anteil von kristallinem Calciumcarbonat jedoch kleiner 90 Gew. %, bevorzugt kleiner 75 Gew.-%, günstigerweise kleiner 50 Gew.-%, besonders bevorzugt kleiner 30 Gew.-%, ganz besonders bevorzugt kleiner 15 Gew.-%, insbesondere kleiner 7 Gew.-%.

Im Rahmen einer weiteren besonders bevorzugten Ausführuhgsform der vorliegenden Erfindung ist der Anteil von kristallinem Calciumcarbonat vergleichsweise hoch und vorzugsweise größer 10 Gew.-%, bevorzugt größer 25 Gew.-%, günstigerweise größer 50 Gew.-%, besonders bevorzugt größer 70 Gew.-%, ganz besonders bevorzugt größer 80 Gew.-%.

Für die Ermittlung der amorphen und der kristallinen Anteile hat sich die Röntgenbeugung mit einem internen Standard, vorzugsweise Aluminiumoxid, in Verbindung mit einer Rietveld-Verfeinerung ganz besonders bewährt.

Die Herstellung der kugelförmigen Calciumcarbonat-Teilchen kann auf an sich bekannte Weise z. B. durch Hydrolyse von Dialkylcarbonat, vorzugsweise Dimethylcarbonat, in einer Calciumchlorid-Lösung erfolgen. Die Reaktion wird zweckmäßigerweise in Gegenwart eines Alkalimetallhydroxids, besonders bevorzugt Natriumhydroxid, durchgeführt. Die Komponenten setzt man dabei günstigerweise in folgenden Konzentrationen ein:

a) $CaCl_2$: 15 mol/l bis 45 mmol/l, insbesondere 17 mmol/l bis 35 mmol/l;
b) Dialkylcarbonat: 15 mmol/l bis 45 mmol/l, insbesondere 17 mmol/l bis 35 mmol/l;
c) Alkalimetallhydroxid: 20 m/mol/l bis 50 mmol/l, besonders bevorzugt 25 mmol/l bis 45 mmol/l, insbesondere 28 mmol/l bis 35 mmol/l.

Weiterhin ist das molare Verhältnis von Calciumchlorid zu Alkalimetallhydroxid in der Reaktionsmischung vorzugsweise größer 0,5 : 1 und besonders bevorzugt im Bereich von >0,5 : 1 bis 1 : 1, insbesondere im Bereich von 0,6 : 1 bis 0,9 : 1.

Das molare Verhältnis von Calciumchlorid zu Dialkylcarbonat in der Reaktionsmischung liegt günstigerweise im Bereich von 0,9 : 1,5 bis 1,1 : 1, besonders bevorzugt im Bereich von 0,95 : 1 bis 1 : 0,95. Im Rahmen einer ganz besonders zweckmäßigen Variante der vorliegenden Erfindung werden das Dialkylcarbonat und das Calciumchlorid äquimolar eingesetzt.

Die Reaktion wird vorzugsweise bei einer Temperatur im Bereich von 15°C bis 30°C durchgeführt.

Die konkrete Größe der Calciumcarbonat-Teilchen kann auf an sich bekannte Weise über die Übersättigung gesteuert werden.

Die Calciumcarbonat-Teilchen fallen unter den oben genannten Bedingungen aus der Reaktionsmischung aus und können auf an sich bekannte Weise, z. B. durch Zentrifugation abgetrennt und durch Waschen mit Aceton ggf. gereinigt und im Vakuumtrockenschrank getrocknet werden.

Für die Zwecke der vorliegenden Erfindung werden die so erhaltenen Calciumcarbonat-Teilchen derart getrocknet, dass sie den gewünschten Restwassergehalt aufweisen. Hierfür hat sich die Trocknung bei einer Temperatur im Bereich von 150°C bis 220°C, bevorzugt im Bereich von 160°C bis 210°C, besonders bevorzugt im Bereich von 170°C bis 210°C, insbesondere im Bereich von 180°C bis 200°C besonders bewährt. Die Trocknung erfolgt vorzugsweise im Umlufttrockenschrank. Dabei werden die Calciumcarbonat-Teilchen zweckmäßigerweise mindestens 3 h, besonders bevorzugt mindestens 6 h, insbesondere mindestens 20 h getrocknet.

Die erfindungsgemäßen Calciumcarbonat-Teilchen eignen sich prinzipiell für alle Anwendungen, die für Calciumcarbonat vorgezeichnet sind. Hierzu gehören insbesondere die Verwendung als Additiv oder Modifizierungsmittel in Papier, Farben, Kunststoffen, Tinten, Klebstoffen und Pharmazeutika, insbesondere als Füllstoff von vorzugsweise organischen Polymeren.

Besonders zweckmäßige Polymer-Compounds enthalten, jeweils bezogen auf ihr Gesamtvolumen, 99,9 Vol.-% bis 50,0 Vol.-%, besonders bevorzugt 95,0 Vol.-% bis 50,0 Vol.-% mindestens eines Polymers und 0,1 Vol.-% bis 50,0 Vol.-%, besonders bevorzugt 5,0 Vol.-% bis 50 Vol.-% kugelförmige Calciumcarbonat-Teilchen. Thermoplastisch verarbeitbare Polymere, bevorzugt bei Temperaturen im Bereich von 100°C bis 250°C thermoplastisch verarbeitbare Polymere, insbesondere Polyethylen, wie LLDPE, HDPE, Polypropylen (PP), Polystyrol (PS) und Polymilchsäure (PLA) werden in diesem Zusammenhang besonders bevorzugt.

Die Einarbeitung des Füllstoffs in das Polymer kann auf an sich bekannte Weise, z. B. durch thermoplastische Verarbeitung, erfolgen, wobei sich Extrusionsverfahren im Rahmen der vorliegenden Erfindung ganz besonders bewährt haben.

Abbildungen

Die beiliegenden Figuren zeigen:

Fig. 1 REM-Aufnahmen von Calciumcarbonat-Teilchen in Abhängigkeit von der Calciumchlorid-Konzentration in der Reaktionsmischung

Fig. 2 FTIR-Spektren von Calciumcarbonat-Teilchen in Abhängigkeit von der Calciumchlorid-Konzentration in der Reaktionsmischung

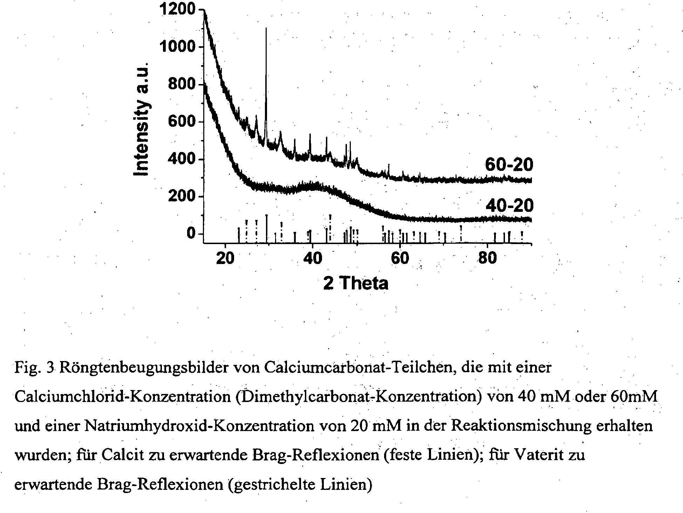

Fig. 3 Röngtenbeugungsbilder von Calciumcarbonat-Teilchen in Abhängigkeit von der Calciumchlorid-Konzentration in der Reaktionsmischung

Fig. 4 REM-Aufnahmen von Calciumcarbonat-Teilchen in Abhängigkeit von der Calciumchlorid-Konzentration und der Basenkonzentration in der Reaktionsmischung

Fig. 5 DSC-Kurven von Calciumcarbonat-Teilchen in Abhängigkeit von der Calciumchlorid-Konzentration und der Basenkonzentration in der Reaktionsmischung Fig. 6 Röntgenbeugungsbild von getrockneten Calciumcarbonat-Teilchen "20-30"

Fig. 7 REM-Aufnahmen von getrockneten Calciumcarbonat-Teilchen "20-30" und von Precarb 400

Fig. 8 REM-Aufnahmen von gefülltem LLDPE, PS, PP und PLA

Fig. 9 Spannungs-Dehnungskurven von ggf. gefülltem HDPE, LLDPE und PP

Fig. 10 Viskositätskurven von ggf. gefülltem LLDPE und HDPE

Fig. 11 Speicher- und Verlustmodul von ggf. gefülltem LLDPE und HDPE

Beispiele und Vergleichsbeispiele

Im Folgenden wird die Erfindung durch mehrere Beispiele und Vergleichsbeispiele veranschaulicht, ohne dass hierdurch eine Beschränkung der Erfindung auf diese konkrete Ausführungsformen erfolgen soll.

Charakterisierung

Die Eigenschaften der Calciumcarbonat-Teilchen und der Polymer-Compounds wurden wie folgt bestimmt.

Elektronenmikroskop

Die rasterelektronischen Aufnahmen wurden mit einem Gerät des Typs LEO 1530 Gemini mit einer Beschleunigungsspannung von 3 kV (Pulver) oder mit einem Hochspannungselektronenmikroskop (Zeiss, DSM 962) bei 15 kV (Polymer-Compounds) durchgeführt. Die extrudierten Proben wurden in flüssigem Stickstoff gebrochen und mit einer Gold-Palladiumschicht besprüht.

Infrarotspektroskopie

Die IR-Spektren wurden mit einem Nicolet 730 FTIR Spektrometer aufgenommen, wobei die Proben mit KBr vermischt wurden.

Röntgenstreuung

Die Kristallform der Calciumcarbonat-Teilchen wurde durch Röntgenstreuung (Cu Ka-Strahlung) ermittelt.

DSC

Die DSC-Messungen wurden unter Stickstoff auf einem Mettler-Toledo DSC 30S durchgeführt. Die Eichung erfolgte mit Indium. Die Messungen wurden unter trockenem, Sauerstoff-freien Stickstoff (Strömungsgeschwindigkeit: 40 ml/min) durchgeführt. Das Probengewicht wurde zwischen 15 mg und 20 mg gewählt. Die Proben wurden zunächst von 25°C auf 230°C erwärmt, dann auf 25°C abgekühlt und ein zweites Mal von 25°C auf 230°C mit einer Heizrate von 10°C/min erwärmt.

Thermogravimetrie (TGA)

Die Thermogravimetrie wurde mit einem Mettler-Toledo ThermoSTAR TGA unter Stickstoff im Bereich von 25°C bis 800°C bei einer Heizrate von 10°C/min durchgeführt.

Spezifische Oberfläche (BET)

Die spezifische Oberfläche der Teilchen wurde durch das BET-Verfahren (Micromeritics Gemini 2360 Analyser) über die Stickstoff-Adsorption durchgeführt. Die Proben wurden für die Adsorptionsuntersuchungen bei 130°C für mindestens 3 h entgast (FlowPrep 060 Degasser).

Ölabsorption

Die Ölabsorption wurde mit Diisononylphthalat (DINP) nach dem Ausreibverfahren analog EN ISO 787-5 gemessen. Bei diesem Test wird DINP mit der Probe gemischt und mit einem Spatel auf einer glatten Oberfläche gerieben, bis sich eine harte, kitartige Paste bildet, die nicht bricht oder sich auftrennt. Die Ölabsorption in g/100 g Probe wurde über

$$\ddot{O}labsorption = \frac{g\ absorbiertes\ DINP}{Probengewicht, g} \bullet 100$$

berechnet.

Schmelzviskosität

Die Schmelzviskosität der reinen Polymere und der Compounds wurden mit dem Rheometer ARES von TA Instruments ermittelt. Nach einem Strain-Durchlauf Versuch wurde die komplexe Viskosität der Materialien im linearen Bereich unter Verwendung von parallelen Platten mit einem Durchmesser von 13 mm über den Frequenzbereich von $0{,}01\ s^{-1}$ bis $100\ s^{-1}$ gemessen.

Mechanische Eigenschaften

Die mechanischen Eigenschaften wurden durch Zugversuche bestimmt, die auf einem Instron 4200, ausgestattet mit einer 0,1 kN oder 1 kN Kraftmessdose, durchgeführt wurden. Die Traversengeschwindigkeit betrug 10 mm/min. Für die Messungen wurden Prüfkörper (2 mm x 15 mm x 0,16 mm $\pm$ 0,02 mm) aus einem Film ausgeschnitten, der durch Aufschmelzen der extrudierten Stäbe in einer hydraulischen Presse bei einer Temperatur von 180°C und unter einem Druck von 40 kN erhalten wurde. Mindestens 4 Proben wurden für jedes Material bei Raumtemperatur getestet.

Synthese der Calciumcarbonat-Teilchen

Calciumchlorid-Dihydrat und Dimethylcarbonat wurden in MilliQ-Wasser bei 20°C gelöst. Eine Lösung von Natriumhydroxid in MilliQ-Wasser wurde in einem separaten Gefäß bei 20°C hergestellt. Die beiden Lösungen werden rasch gemischt und der gebildete Niederschlag wird von der Mutterlauge durch Zentrifugation abgetrennt, mit Aceton gewaschen und im Vakuum bei Raumtemperatur getrocknet. Die in den jeweiligen Beispielen verwendeten Konzentrationen an Calciumchlorid, Dimethylcarbonat und Natriumhydroxid in der Reaktionsmischung sowie die erhaltenen Ausbeuten werden in Tabelle 1 zusammengefasst. Dabei wird auch der Code angegeben, der in den Abbildungen für die Zuordnung der Beispiele verwendet wird.

Tabelle 1

| Beispiel "Code" | Calciumchlorid [mM] | Dimethylcarbonat [mM] | Natriumhydroxid [mM] | Ausbeute [% d. Theorie] |
|---|---|---|---|---|
| B1 "20-20" | 20 | 20 | 20 | 19 |

(fortgesetzt)

| Beispiel "Code" | Calciumchlorid [mM] | Dimethylcarbonat [mM] | Natriumhydroxid [mM] | Ausbeute [% d. Theorie] |
|---|---|---|---|---|
| B2 "20-30" | 20 | 20 | 30 | 29 |
| B3 "20-40" | 20 | 20 | 40 | 35 |
| B4 "20-50" | 20 | 20 | 50 | 40 |
| B5 "25-30" | 25 | 25 | 30 | 25 |
| B6 "25-40" | 25 | 25 | 40 | 35 |
| B7 "25-50" | 25 | 25 | 50 | 44 |
| B8 "30-20" | 30 | 30 | 20 | 10 |
| B9 "30-30" | 30 | 30 | 30 | 17 |
| B10 "30-40" | 30 | 30 | 40 | 31 |
| B11 "30-50" | 30 | 30 | 50 | 40 |
| B12 "40-20" | 40 | 40 | 20 | 7 |
| B13 "40-30" | 40 | 40 | 30 | 12 |
| B14 "50-20"x | 50 | 50 | 20 | 4 |
| B15 "60-20"x | 60 | 60 | 20 | 3 |
| R16 "80-20"x | 80 | 80 | 20 | |
| R17 "100-100"x | 100 | 100 | 100 | 16 |
| x : nicht erfindungsgemäß | | | | |

Das. Verfahren der vorliegenden Erfindung erlaubt die Herstellung von sehr regelmäßigen Calciumcarbonat-Kugeln mit einer engen Teilchengrößenverteilung.

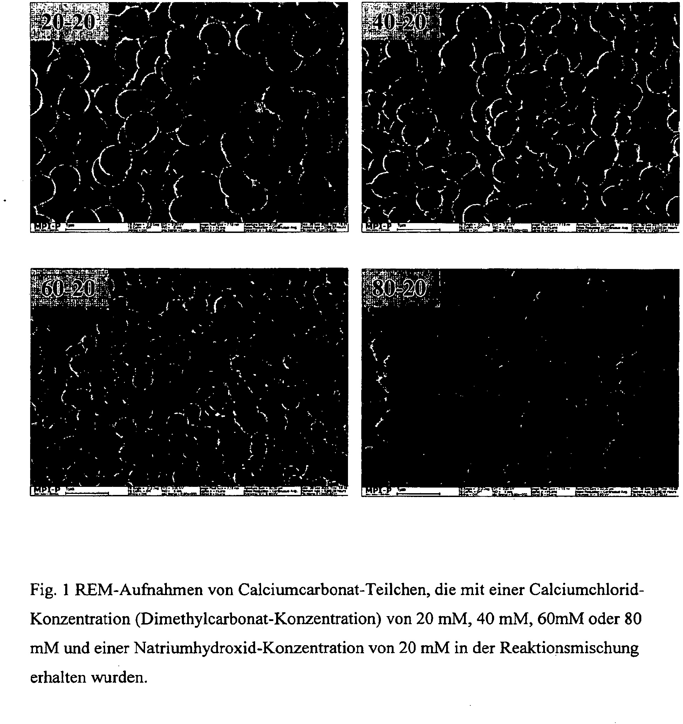

Die Morphologie der erhaltenen Calciumcarbonat-Teilchen wird in Fig. 1 für einige Beispiele exemplarisch gezeigt. Der mittlere Durchmesser der Teilchen nahm von 790 nm für B1 "20-20" bis auf 430 nm für B15 "60-20" ab. Die Teilchengrößenverteilung wurde breiter, wenn die Calciumchlorid-Konzentration in der Reaktionsmischung erhöht wurde. Die Teilchen behielten ihre kugelförmige Gestalt bis zu einer Calciumchlorid-Konzentration von 60 mM. Eine weitere Erhöhung der Calciumchlorid-Konzentration führte jedoch zu einem Material mit einer schlecht bestimmbaren Form und weiterhin wurden kleinere Mengen an großen kugelförmigen Teilchen mit einem Durchmesser von bis zu 3 - 4 $\mu$m beobachtet.

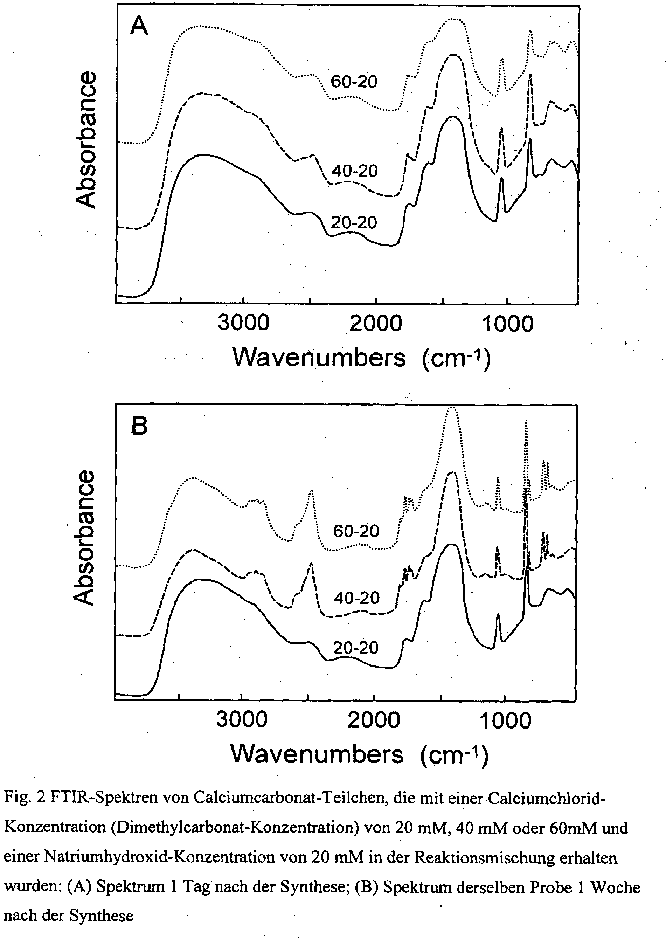

FTIR-Untersuchungen der Proben zeigen in allen Fällen die wesentlichen Merkmale von amorphen Calciumcarbonat (Fig. 2A). Eine breite Bande bei 863 cm$^{-1}$, eine Absorption bei 1075 cm$^{-1}$, eine breite Bande bei 1440 cm$^{-1}$ sowie eine breite Absorption bei ca. 3350 cm$^{-1}$ und bei 1640 cm$^{-1}$ wegen der Wassermoleküle werden beobachtet. Für Materialien, die bei höheren Reaktand-Konzentrationen erhalten wurden, werden schwach ausgebildete Absorptionsbanden für Calcit (712 cm$^{-1}$) beobachtet. Interessanterweise zeigen dieselben Proben eine Woche nach der Synthese ein für kristallines Material typisches FTIR-Absorptionsspektrum mit sehr charakteristischen Absorptionsbanden, die auf die Gegenwart von Vaterit (1088, 745 cm$^{-1}$) und Calcit (875 und 712 cm$^{-1}$) hinweisen (Fig. 2B).

Röntgenbeugungsuntersuchungen bestätigen, dass für das bei einer Calciumchlorid-Konzentration von 60mM hergestellte Material ein für Calcit und Vaterit übliches Spektrum erhalten wird. Das Spektrum zeigt jedoch auch, dass die kristallinen Polymorphe nicht der dominierende Bestandteil sind, sondern dass ein großer Teil des Materials weiterhin amorph ist. Dies erklärt, dass die im FTIR-Spektrum beobachteten Banden weder typisch "amorph" noch "kristallin" sind, was auf die Gegenwart von schwach ausgebildetem kristallinem Material hinweist.

Die Induktionszeit für die Fällung, gekennzeichnet durch das Auftreten einer Trübung, nimmt mit zunehmender Konzentration an Calciumchlorid und Dimethylcarbonat zu. Eine größere Menge Dialkylcarbonat ermöglicht, dass die für die Nukleierung notwendige Menge Kohlendioxid schneller erreicht wurde, bedingt jedoch auch einen hohen Basenverbrauch am Anfang des Verfahrens, der zu einem abrupten Abnahme des pH-Werts führt. Daraufhin wird das Teilchenwachstum als eine Folge der sukzessiven Abnahme der Kohlendioxid-Konzentration gehemmt.

Bei höheren Konzentrationen der Komponenten nimmt die Ausbeute ab und der Teilchendurchmesser wird kleiner. Die Verringerung der im Verfahren verwendeten Basenmenge verlangsamt die Hydrolyse des Dimethylcarbonats und beeinflusst das Übersättigungsniveau. Jedoch darf die Konzentration der Base nicht zu niedrig sein, da ansonsten das Übersättigungsniveau im Verlauf der Fällung sich schnell ändert und infolgedessen anfänglich gebildetes amorphes Calciumcarbonat beginnt, sich in Vaterit und Calcit umzuwandeln. So werden in Proben, die mit zuwenig Base hergestellt werden, kleine Mengen kugelförmiger Teilchen mit einem Durchmesser von 3 - 4 $\mu$m gefunden. Weiterhin ist das amorphe Calciumcarbonat in diesen Proben instabil und wandelt sich innerhalb einer Woche bei Raumtemperatur in Calcit um.

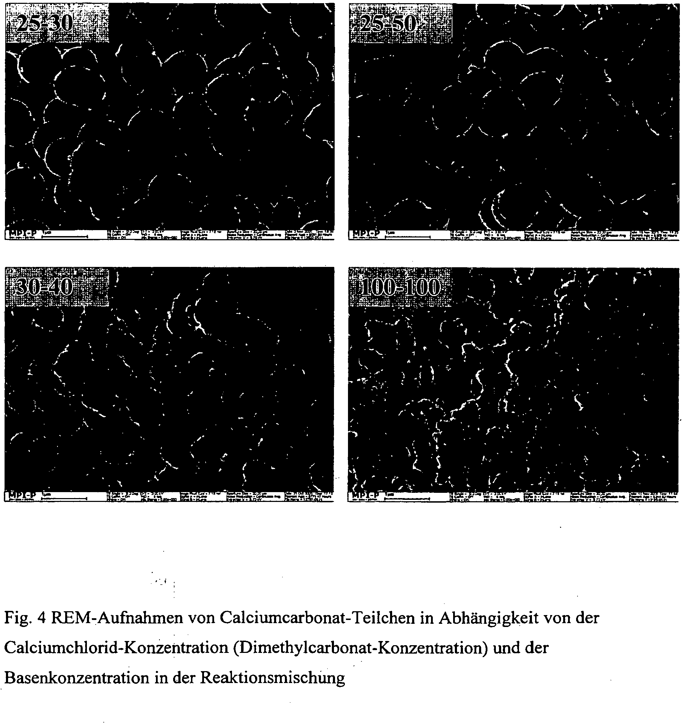

Um die Produktausbeute zu erhöhen, ist es notwendig, höhere Basenkonzentrationen zu verwenden, da der höhere pH-Wert die Hydrolyse des Alkylcarbonats beschleunigt und dies zur Bildung einer hinreichenden Menge Kohlendioxid im System führt (s. Tabelle 1). Die REM-Aufnahmen zeigen, dass die Teilchenform durch die Konzentration der Komponenten stark beeinflusst wird und dass Materialien, die aus hoch-konzentrierten Lösungen hergestellt werden (B10 "30-40" oder R17 "100-100") kleinere Teilchengrößen haben und stärker agglomerieren (Fig. 4). FTIR- und Röntgenbeugungsmessungen bestätigen die amorphe Morphologie der Materialien, die aus Reaktionsmischungen hergestellt werden, in welchen die anfängliche Basenkonzentration größer 20 mM ist.

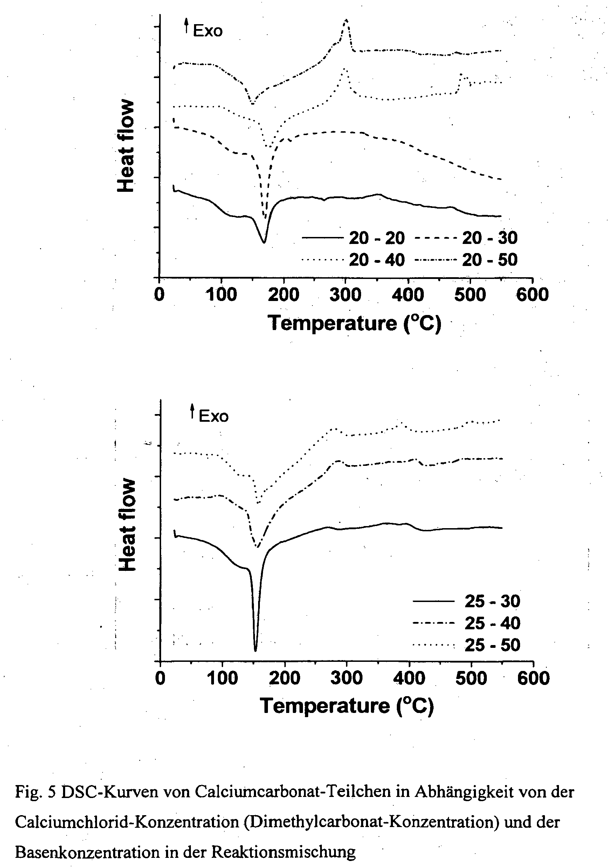

Die Konzentration der Komponenten bestimmt nicht nur die Teilchengröße, sondern auch die thermischen Eigenschaften des Materials. In Abhängigkeit von der Anfangskonzentration zeigt die Calciumcarbonat-Teilchen einen oder zwei ausgeprägte thermische Übergänge in den DSC-Kurven (Fig. 5). Der erste breite endotherme Übergang wird der Freisetzung von adsorbiertem Wasser und Strukturwasser zugeordnet. Dieser Übergang umfasst üblicherweise zwei mehr oder weniger unterscheidbare Signale. Ein breites Signal mit einem Maximum bei 100°C - 120°C ist bei Calciumcarbonat stärker ausgebildet, das bei niedrigerem pH ausgefällt wird. Das zweite schmale Signal tritt im Bereich von 150°C - 170°C auf. Die Position und Form dieses Signals hängt wiederum vom pH ab, bei welchem die Calciumcarbonat-Teilchen ausgefällt werden. Bei höherem pH ist das Signal bei etwas höherer Temperatur zu beobachten und wird breiter.

Der schmale exotherme Übergang in den DSC-Kurven bei ungefähr 290°C wird der vollständigen Wasserfreisetzung zugeordnet, die mit der Umwandlung des amorphen Calciumcarbonats in Calcit verbunden ist. Bei Materialien, die bei höheren Calciumchlorid- und Dimethylcarbonat-Konzentrationen, aber niedrigeren Basenkonzentrationen ausgefällt werden, wird dieser Übergang jedoch nicht immer beobachtet. Hier wird eher ein gleichmäßiger Anstieg der Grundlinie anstelle eines Signals beobachtet (Fig. 5 B5 "25-30"). Weiterhin wird auch eine Abnahme der Enthalpie des endothermen Prozesses registriert.

Die durch die DSC beobachtete Freisetzung des Wassers entspricht dem in der TGA beobachteten Gewichtsverlust. Für Proben, die mit mehr als 20 mM Base synthetisiert werden, ist die gemessene Wassermenge im Bereich von 8 Gew.-% bis 10 Gew.-% des Gesamtgewichts der Materialien. Calciumcarbonate, die mit weniger Base erhalten werden, enthalten viel weniger Wasser und der relative Anteil nimmt bis auf 2 Gew.-% ab, wenn die Calciumchlorid-Konzentration erhöht wird. Diese Materialien sind jedoch zumindest teilweise kristallin.

Für die Zwecke der vorliegenden Erfindung ist insbesondere das amorphe Calciumcarbonat B2 "20-30" geeignet. Es ist aus sehr regelmäßigen, nicht-agglomerierten Teilchen mit einem mittleren Teilchendurchmesser im Bereich von 0,9 $\mu$m bis 1,2 $\mu$m aufgebaut, abhängig von dem verwendeten Reaktionsgefäß. Das Material ist nicht mit kristallinen Calciumcarbonatformen verunreinigt und zeigt eine mehr als 3 monatige Langzeit-Lagerstabilität, obwohl bekannt ist, dass amorphes Calciumcarbonat an sich nicht stabil ist und sich in Gegenwart von Feuchtigkeit mit der Zeit spontan in kristalline Formen umwandelt.

Trocknung des amorphen Calciumcarbonats

Beispiel B2 wurde im Trockenofen bei einer vorgegebenen Temperatur für eine vorgegebene Zeit getrocknet. Hierbei erfolgte eine teilweise Kristallisation zu Calcit, was jedoch an der kugelförmigen Morphologie nichts änderte. Die spezifische Oberfläche (BET) wuchs von 2 m$^2$/g auf 12 m$^2$/g. Der Restwassergehalt des getrockneten ACC wurde mittels Thermogravimetrie (TGA) bestimmt. Die Ergebnisse werden in Tabelle 2 zusammengefasst.

Tabelle 2

| Versuch | Temperatur [°C] | Zeit [h] | Restwassergehalt [Gew.-%] |
|---------|-----------------|----------|---------------------------|
| V1 | RT | 0 | 9 |
| V2 | 120 | 1 | 6,7 |
| V3 | 120 | 3 | 5,7 |
| V4 | 120 | 6 | 4,3 |
| V5 | 120 | 24 | 2,5 |
| V6 | 160 | 1 | 2,2 |

(fortgesetzt)

| Versuch | Temperatur [°C] | Zeit [h] | Restwassergehalt [Gew.-%] |
|---|---|---|---|
| V7 | 160 | 3 | 1,5 |
| V8 | 160 | 6 | 1,3 |
| V9 | 160 | 24 | 0,9 |
| V10 | 180 | 1 | 1,0 |
| V11 | 180 | 3 | 0,5 |
| V12 | 180 | 6 | 0,3 |
| V13 | 180 | 24 | 0,3 |
| V14 | 200 | 1 | 0 |
| V15 | 200 | 3 | 0 |
| V16 | 200 | 6 | 0 |
| V17 | 200 | 24 | 0 |

Eine Trocknung des Materials bei 80°C für 72 Stunden in Luft regte die Kristallisation des Materials an und das Röngtenbeugungsbild zeigte schwache Reflexionen von Calcit. Der Wassergehalt nach dieser Trocknung war nach TGA ungefähr 2 Gew.-%.

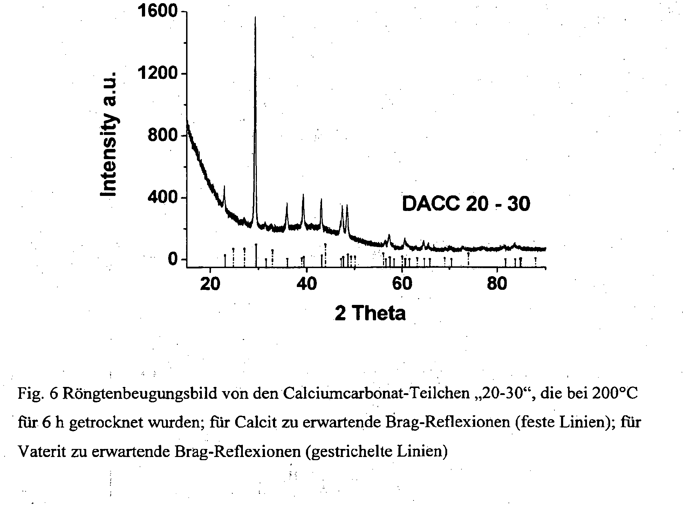

Ansonsten gilt: Je höher die Temperatur und die Trocknungszeit ist, desto höher ist die freigesetzte Wassermenge. Der Wasserverlust wird von einer Umwandlung des Materials in Calcit begleitet (Fig. 6). Die Röntgenbeugungsbilder zeigen jedoch, dass dieser Kristallisatiohsprozess selbst bei höheren Temperaturen nur langsam auftritt. Sogar nach 6 Stunden bei 200°C ist das Material zumindest teilweise noch amorph.

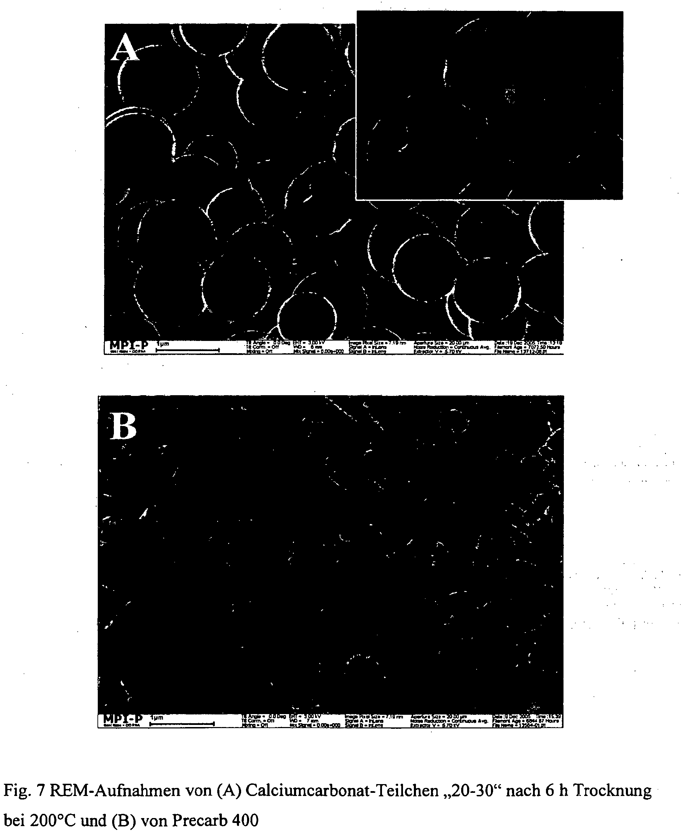

Die Morphologie der Teilchen ändert sich während des Trocknens nicht. Nur die Oberfläche der Kugeln wird etwas rauer (s. Fig. 7A). Einige der kugelförmigen Teilchen weisen eine restrukturierte Oberfläche und kleine Teilchen mit Durchmessern von ca. 30 nm - 40 nm innerhalb der Kugeln auf (Einschub in Fig. 7A), die Calcit zugeordnet werden können. Die Kristallgröße, die aus den Debye-Scherer Röntgenbeugungsbildern ermittelt wurden, weisen auf Kristalle mit einem Durchmesser im Bereich von 25 nm - 35 nm hin.

Polymer-Compounds

Das getrocknete amorphe Calciumcarbonat V16 wurde in lineares Polyethylen niedrigerer Dichte (LLDPE), Polyethylen hoher Dichte (HDPE), Polypropylen (PP), Polystyrol (PS) und Polymilchsäure (PLA) eingearbeitet. Als Referenz diente ein gefälltes Calciumcarbonat (Precarb 400 von Schaefer Kalk GmbH & Co. KG) mit nadelförmigen (Aragonit) und somatoiden (Calcit) Partikeln, das kommerziell als funktioneller Füllstoff für z.B. Hart-PVC-Compounds verwendet wird. Beide Füllstoffe wurden ohne Oberflächenmodifikation eingesetzt.

Die Eigenschaften des getrockneten amorphen Calciumcarbonats V16 und eines kommerziellen Materials (Precarb 400) werden in Tabelle 3 und Fig. 7 gezeigt. Die beiden Materialien unterscheiden sich deutlich in der Teilchenform. Das amorphe Calciumcarbonat V16 besitzt eine regelmäßige kugelförmige Gestalt, während Precarb 400 zum Teil aus Nadeln mit einem hohen Formfaktor besteht. Die spezifische Oberfläche und die DINP-Absorption sind beim Calciumcarbonat V16 etwas geringer, aber die Erreichbarkeit der Oberfläche ist vergleichbar.

Tabelle 3

| Parameter | V16 | Precarb 400 |
|---|---|---|
| Polymorph | Calcit / Vaterit / amorph | Aragonit / Calcit |
| Teilchenform und mittlere Teilchengröße | Kugeln 1,15 $\mu$m | Nadeln und Somatoide 1,16 $\mu$m x 0,20 $\mu$m |
| Spezifische Oberfläche (BET) | 12,2 m$^2$/g | 8,4 m/g |
| DINP Absorption | 51 g/100 g | 68g/100g |

Das getrocknete V16-Pulver bzw. das Precarb 400-Pulver wurde zunächst mit dem Polymerpulver oder -granulat mechanisch gemischt. 5 g dieser Mischung wurden dann mit einem Doppelschneckenextruder extrudiert. Die Extrusionstemperatur war 230°C für LLDPE, HDPE und PP und 200°C für PLA. Die Extrusion wurde bei einer Schneckengeschwindigkeit von 100 Upm unter Stickstoffatmosphäre durchgeführt. Die jeweils eingesetzten Mengen an Polymer und Füllstoff werden in Tabelle 4 zusammengefasst.

Tabelle 4

| Compound | Polymer | Füllstoff | Füllstoffanteil in der eingesetzten Mischung [Gew.-%] ([Vol.-%]) | Füllstoffanteil im Compound [Gew.-%] |
|---|---|---|---|---|
| C1 | LLDPE | Precarb 400 | 23,1 (10) | 20,8 |
| C2 | LLDPE | V16 | 23,1 (10) | 21,1 |
| C3 | HDPE | Precarb 400 | 23,1 (10) | 23,7 |
| C4 | HDPE | V16 | 23,1 (10) | 25,0 |
| C5 | PP | Precarb 400 | 23,1 (10) | 14,5 |
| C6 | PP | V16 | 23,1 (10) | 19,3 |
| C7 | PP | Precarb 400 | 64,3 (40) | 56,4 |
| C8 | PP | V16 | 64,3 (40) | 55,2 |
| C9 | PS | Precarb 400 | 23,8 (10) | 18,9 |
| C10 | PS | V16 | 23,8 (10) | 19,9 |
| C11 | PLA | Precarb 400 | 19,5 (10) | 4,3 |
| C12 | PLA | V16 | 19,5 (10) | 22,6 |
| C13 | PLA | Precarb 400 | 40,0 (20) | 41,3 |
| C14 | PLA | V16 | 40,0 (20) | 32,9 |

Bereits bei der Compoundierung zeigte sich, dass die Compounds mit V16 leichter herzustellen sind. Speziell bei der statistisch ungünstigen Vormischung von Granulat und Pulver bei der schwierig zu verarbeitenden Polymilchsäure gelang die Einarbeitung von 20 Gew.-% getrocknetem amorphem Calciumcarbonat wesentlich genauer als beim konventionellen Precarb 400.

Der Anteil des anorganischen Füllstoffs im Compound wurde mittels TGA-Untersuchungen ermittelt und wird ebenfalls in Tabelle 4 angegeben. Die ermittelten Werte stimmten in den meisten Fällen mit eingesetzten Mengen gut überein.

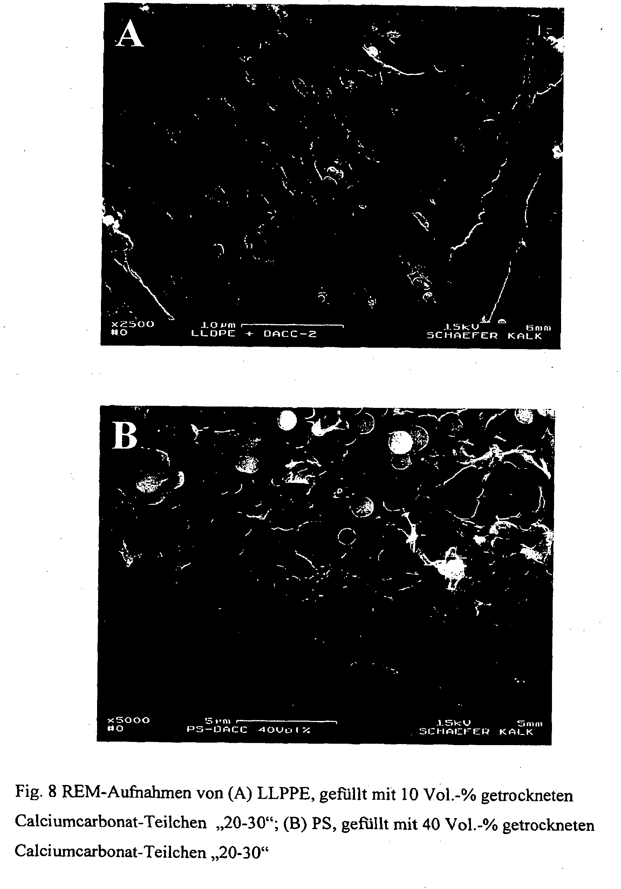

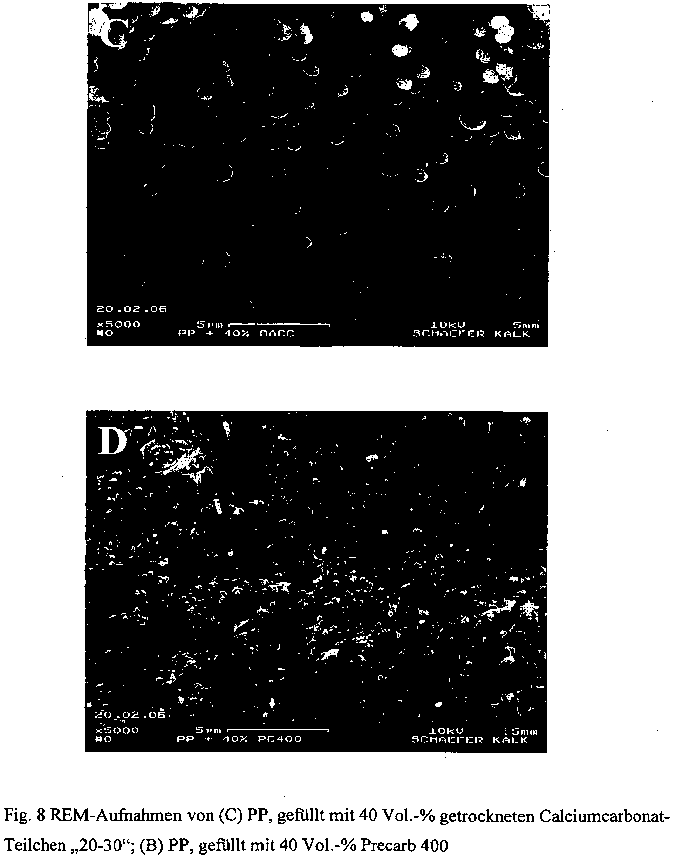

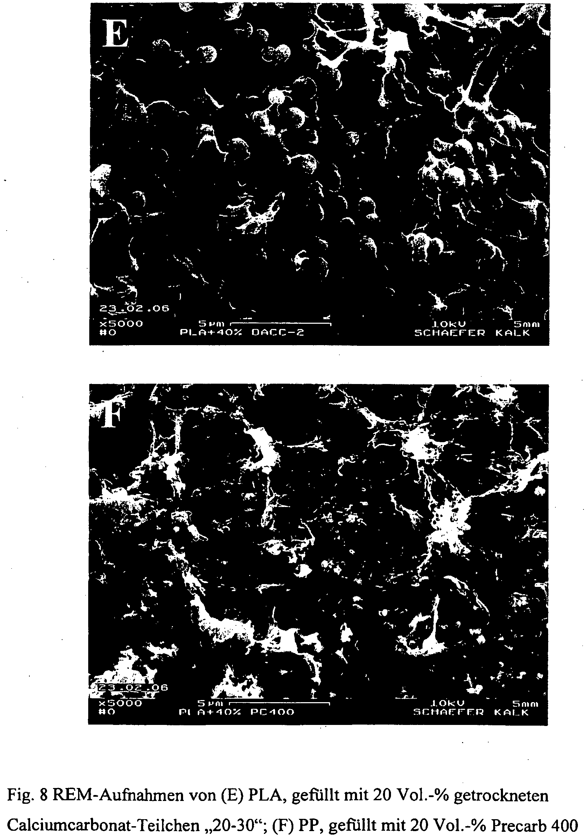

Die Qualität der Dispersion des Füllmaterials kann anhand der REM-Aufnahmen beurteilt werden (Fig. 8). Eine vernünftige Verteilung der Calciumcarbonat-Teilchen wurde in allen Fällen erreicht. Jedoch führte die Verwendung von V16 zu besseren Ergebnissen. Große Aggregate werden nicht beobachtet, was darauf hinweist, dass die Scherkräfte während der Extrusion hinreichend groß waren. Demgegenüber werden für Precarb 400 gelegentlich kleine Aggregate gefunden, die während der Verarbeitung nicht aufgebrochen wurden. Die länglichen Teilchen dieses Materials neigen zu einer Vorzugsausrichtung in Extrusionsrichtung, obwohl einige Teilchen mit senkrechter Ausrichtung zur Extrusionsrichtung auch beobachtet werden. Dies weist darauf hin, dass die Scherkräfte nicht ausreichen, alle Teilchen perfekt zu orientieren.

Weiterhin besitzen die mit Precarb 400 extrudierten Materialien eine rauere Oberfläche als die mit V16 extrudierten Materialien.

Untersuchungen der Bruchoberflächen zeigen Fehlstellen zwischen den Calciumcarbonat-Teilchen und der Polymermatrix, die auf eine nicht optimierte Kompatibilität der anorganischen und der organischen Bestandteile zurückzuführen sind. Einige der Teilchen werden durch Brechen vom Polymer gelöst. Eine etwas bessere Adhäsion des Polymers an den anorganischen Füllstoff ist in den REM-Aufnahmen der Polymilchsäure-basierenden Compounds zu erkennen. Möglicherweise fungiert während der Extrusion gebildete Milchsäure als Bindemittel zwischen dem Polymer und der Calciumcarbonat-Oberfläche.

Obwohl die Trocknung des amorphen Calciumcarbonats zu kleineren Calcit-Kristallen in den Kugeln führte, überstand das V16 die Scherkräfte während der Extrusion und brach nicht auf.

Bei den DSC-Messungen zeigten die LLDPE-, HDPE- und die PP-Compounds nur eine Schmelzendotherme und beim Abkühlen nur ein Kristallisationssignal (Tabelle 5). Die thermischen Eigenschaften der halbkristallinen Polyolefine werden durch die Füllstoffe fast überhaupt nicht beeinflusst, was darauf hinweist, dass die Wechselwirkungen zwischen dem Polymer und dem Füllstoff vernachlässigbar klein sind. Bei PLA als Matrix führen jedoch beide Füllstoffe zu einer Verringerung der Glas- und der Schmelztemperatur, die zum Füllstoffgehalt proportional ist.

Tabelle 5

| Material | $\Delta H_m$ (J/g) | $T_m$ (°C) | Tc (°C) | Tg (°C) |
|---|---|---|---|---|
| LLDPE | 90,0 | 127,2 | 104,0 | - |
| C1 | 104,8 | 129,3 | 105,8 | - |
| C2 | 112,9 | 129,6 | 104,8 | - |
| HDPE | 167,0 | 136,8 | 109,8 | - |
| C3 | 160,0 | 140,0 | 105,2 | - |
| C4 | 164,7 | 139,0 | 106,7 | - |
| PP | 66,7 | 169,0 | 111,3 | - |
| C5 | 71,1 | 165,4 | 116,6 | - |
| C6 | 71,3 | 167,4 | 116,1 | - |
| C7 | 69,5 | 163,7 | 120,9 | - |
| C8 | 70,5 | 163,1 | 126,4 | - |
| PLA | 31,5 | 159,8 | - | 68,2 |
| C11 | 26,3 | 159,4 | - | 61,9 |
| C12 | 23,9 | 158,2 | - | 60,8 |
| C13 | 32,5 | 162,0 | - | 59,3 |
| C14 | 22,5 | 161,2 | - | 59,9 |

Der Einfluss der Füllstoffe auf das Dehnungsverhalten wird in Tabelle 6 zusammengefasst. Grundsätzlich führen beide Füllstoffe zu einer Erhöhung des Young-Moduls und einer Abnahme der Zugfestigkeit und der Reißdehnung. Die Reißdehnung nimmt für alle Compounds gegenüber dem ungefüllten Material ab, obwohl die Abnahme für mit kugelförmigen Calciumcarbonat-Teilchen gefüllte Polymere kleiner ist. Die länglichen Precarb 400-Teilchen führen zu einem Versagen bei sehr geringer Reißdehnung. Dies ist vermutlich auf die Gestalt der Teilchen oder eine inhomogene Verteilung der Teilchen in der Polymermatrix zurückzuführen.

Tabelle 6

| Material | Zugfestigkeit [MPa] | Zugmodul [MPa] | Reißdehnung [%] |
|---|---|---|---|
| LLDPE | 22 ± 0,8 | 161 ± 4 | 686 ± 24 |
| C1 | 13 ± 3,7 | 168 ± 40 | 390 ± 182 |
| C2 | 20 ± 2,5 | 169 ± 26 | 689 ± 60 |
| HDPE | 38 ± 4 | 631 ± 27 | 531 ± 51 |
| C3 | 27 ± 3,7 | 844 ± 157 | 511 ± 47 |
| C4 | 23 ± 6,4 | 823 ± 46 | 415 ± 186 |
| PP | 47 ± 2,6 | 798 ± 91 | 933 ± 29 |
| C5 | 28 ± 2,2 | 1029 ± 95 | 58 ± 14 |
| C6 | 32 ± 5 | 990 ± 40 | 651 ± 129 |

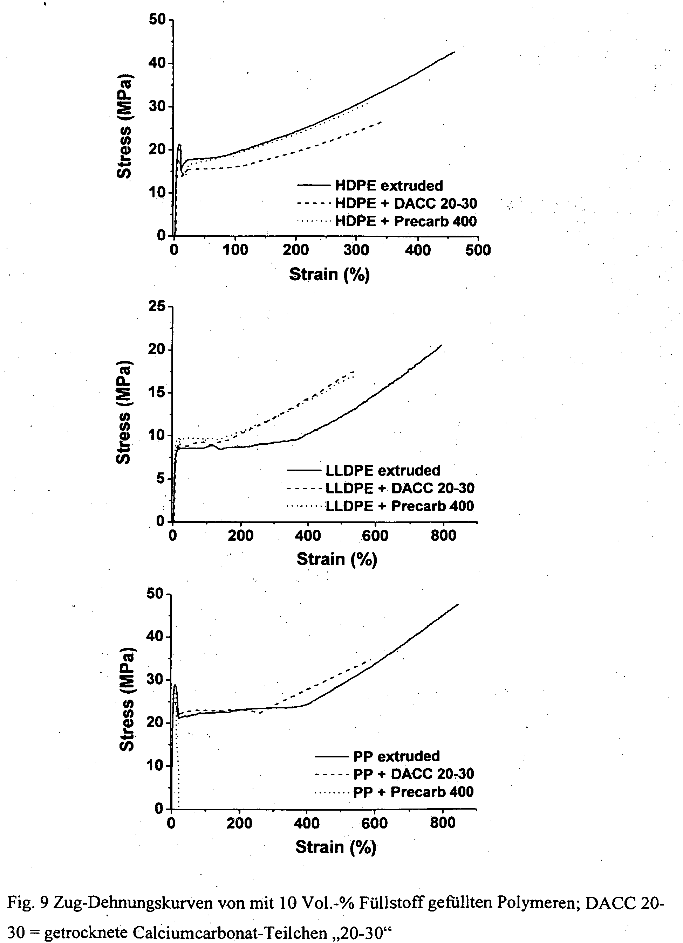

In den Spannungs-Dehnungskurven (Fig. 9) ist die Streckgrenze der gefüllten Polymere niedriger, wobei für die mit V16 gefüllten Polymere die niedrigsten Werte beobachtet werden. Die Abnahme der Streckgrenze sollte zum

Faktor (1 - φ) proportional sein, wobei φ der Volumenbruch des Füllstoffs ist, wenn unter Beanspruchung ein Ablösen der Teilchen von der Polymermatrix stattfindet. Für die mit V16 gefüllten Materialien war die Abnahme der Streckgrenze ungefähr 10%, während für mit Precarb 400 gefüllte Materialien nur ca. 5% beobachtet wurden. Dies deutet auf eine schwache Adhäsion der Polymere an die Teilchen hin.

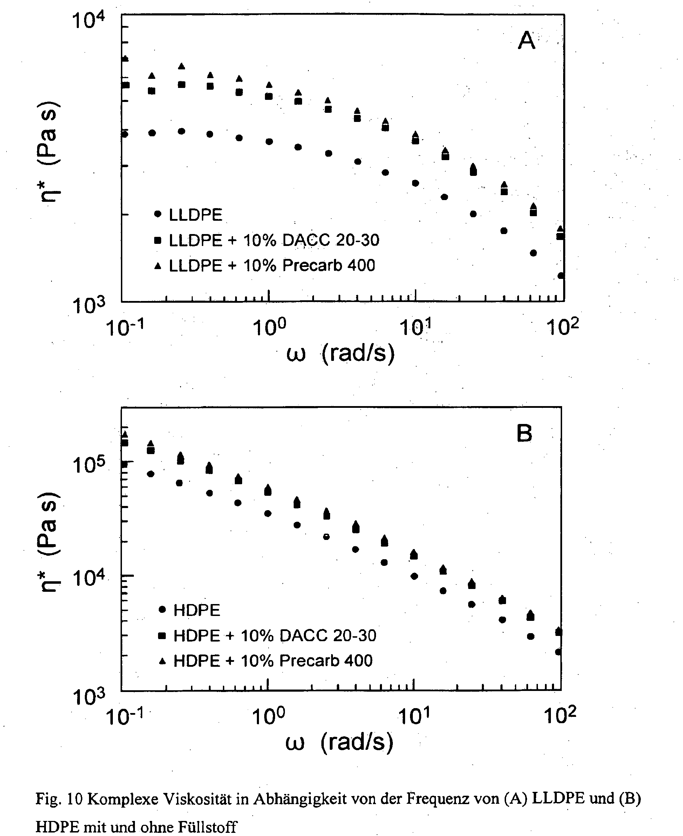

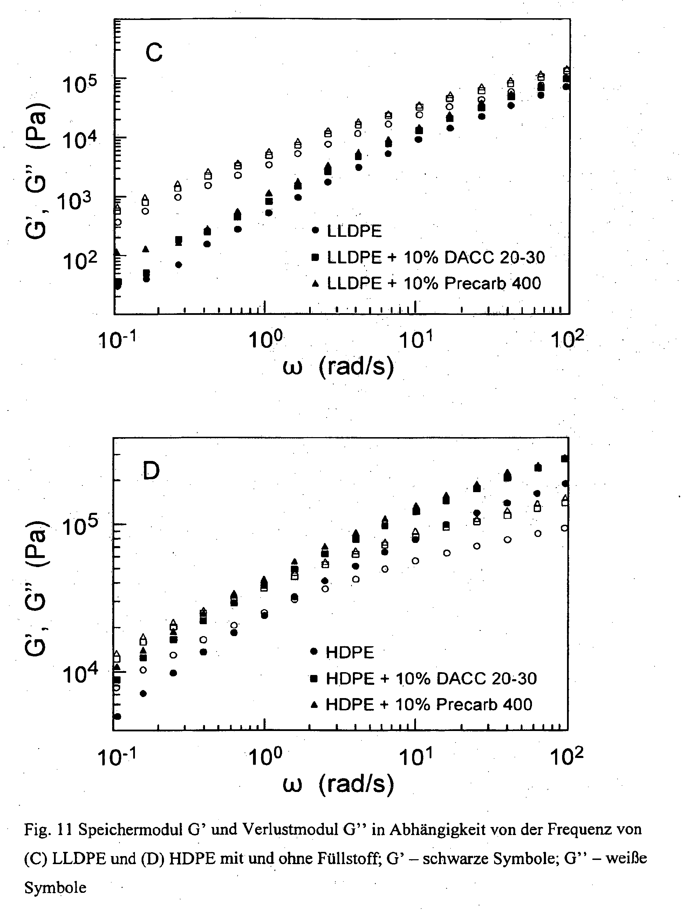

Die Gegenwart der festen Füllstoffe in den thermoplastischen Polymeren beeinflusst ihre Verarbeitbarkeit. Die komplexe Viskosität ($\eta$*) der ungefüllten und der mit 10 Vol.-% Calciumcarbonat gefüllten LLDPE und HDPE bei Frequenzen im Bereich von $0,01 \text{ s}^{-1}$ bis $100 \text{ s}^{-1}$ bei 190°C und 200°C werden in Fig. 10A und 10B gezeigt. Die Viskositätswerte jedes Systems nehmen wegen dem Scherverdünnungseffekt mit steigender Oszillationsrate ab. Die Füllstoffteilchen erhöhen die Viskosität der Compounds verglichen mit den ungefüllten Polymeren. Der Unterschied zwischen mit V 16 gefülltem LLDPE und mit Precarb 400 gefülltem LLDPE ist bei niedrigen Frequenzen ungefähr 20 %, während für HDPE dieser Unterschied nur ca. 6 % beträgt. Bei höheren Frequenzen nimmt der Unterschied zwischen den Viskositäten von ungefüllten und gefüllten Polymeren ab. Die höhere Viskosität der mit Precarb 400 gefüllten Materialien kann der teilweisen Ausrichtung der Teilchen während der Extrusion zugeschrieben werden.

Das komplexe Schermodul als Funktion der Frequenz wird für ungefülltes und gefülltes LLDPE und HDPE in Fig. 11C und 11D wiedergegeben. Die gefüllten Proben zeigen Fließverhalten, das dem der ungefüllten Polymere ähnelt. Es ist eine schwache Zunahme des Speichermoduls (G') und des Verlustmoduls (G") mit zunehmender Frequenz für alle Proben zu erkennen. Die Werte von G' und G" waren für die gefüllten Polymere höher. Das Precarb 400 enthaltende LLDPE zeigte eine signifikante Erhöhung des Speichermoduls bei niedrigen Frequenzen, die auf die Bildung von Agglomeraten zurückzuführen sein könnte.

## Patentansprüche

1. Kugelförmige Calciumcarbonat-Teilchen mit einem mittleren Teilchendurchmesser im Bereich von 0,05 $\mu$m bis 1,75 $\mu$m und einem Wassergehalt von höchstens 5,0 Gew.-%, bezogen auf ihr Gesamtgewicht, **dadurch gekennzeichnet, dass**

   - der Anteil von kristallinem Calciumcarbonat kleiner 90 Gew.-% ist und
   - die Calciumcarbonat-Teilchen durch ein Verfahren erhältlich sind, bei welchem man

   i) Calciumchlorid mit Dialkylcarbonat in Gegenwart eines Alkalimetallhydroxyds in wässriger Lösung umsetzt, wobei man die Komponenten in folgenden Konzentrationen einsetzt:

   | | |
   |---|---|
   | a) $CaCl_2$: | 15 mmol/l bis 45 mmol/l; |
   | b) Dialkylcarbonat: | 15 mmol/l bis 45 mmol/l; |
   | c) Alkalimetallhydroxid: | 20 m/mol/l bis 50 mmol/l |

   ii) das erhaltene Produkt abtrennt und trocknet.

2. Calciumcarbonat-Teilchen nach Anspruch 1, **dadurch gekennzeichnet, dass** die Calciumcarbonat-Teilchen einen Wassergehalt von höchstens 1,0 Gew.-%, bezogen auf sein Gesamtgewicht, aufweisen.

3. Calciumcarbonat-Teilchen nach Anspruch 1 oder 2, **dadurch gekennzeichnet, dass** mindestens 90,0 Gew.-% aller Calciumcarbonat-Teilchen eine Teilchengröße im Bereich von mittlerer Teilchendurchmesser -30 % bis mittlerer Teilchendurchmesser +30 % aufweisen.

4. Calciumcarbonat-Teilchen nach mindestens einem der vorangehenden Ansprüche, **dadurch gekennzeichnet, dass** für mindestens 90 % aller Teilchen der Quotient aus minimalem Teilchendurchmesser und maximalen Teilchendurchmesser größer 0,90 ist.

5. Calciumcarbonat-Teilchen nach mindestens einem der vorangehenden Ansprüche, **dadurch gekennzeichnet, dass** der Anteil von kristallinem Calciumcarbonat, bezogen auf ihr Gesamtgewicht, kleiner 50 Gew.-% ist.

6. Calciumcarbonat-Teilchen nach Anspruch 5, **dadurch gekennzeichnet, dass** die Calciumcarbonat-Kristalle eine Teilchengrößen kleiner 50 $\mu$m aufweisen.

**7.** Calciumcarbonat-Teilchen nach mindestens einem der vorangehenden Ansprüche, **dadurch gekennzeichnet, dass** die Calciumcarbonat-Teilchen eine spezifische Oberfläche im Bereich von 2 m²/g bis 20 m²/g aufweisen.

**8.** Calciumcarbonat-Teilchen nach mindestens einem der vorangehenden Ansprüche, **dadurch gekennzeichnet, dass** die Calciumcarbonat-Teilchen durch ein Verfahren erhältlich sind, bei welchem man das molare Verhältnis von Calciumchlorid zu Alkalimetallhydroxid in der Reaktionsmischung größer 0,5 : 1 wählt.

**9.** Calciumcarbonat-Teilchen nach mindestens einem der vorangehenden Ansprüche, **dadurch gekennzeichnet, dass** die Calciumcarbonat-Teilchen durch ein Verfahren erhältlich sind, bei welchem man das molare Verhältnis von Calciumchlorid zu Dialkylcarbonat in der Reaktionsmischung im Bereich von 0,9 : 1,5 bis 1,1 : 1 wählt.

**10.** Calciumcarbonat-Teilchen nach mindestens einem der vorangehenden Ansprüche, **dadurch gekennzeichnet, dass** die Calciumcarbonat-Teilchen durch ein Verfahren erhältlich sind, bei welchem man die Reaktion bei einer Temperatur im Bereich von 15°C bis 30°C durchführt.

**11.** Calciumcarbonat-Teilchen nach mindestens einem der vorangehenden Ansprüche, **dadurch gekennzeichnet, dass** die Calciumcarbonat-Teilchen durch ein Verfahren erhältlich sind, bei welchem man Dimethylcarbonat als Dialkylcarbonat und Natriumhydroxid als Alkalimetallhydroxid einsetzt.

**12.** Calciumcarbonat-Teilchen nach mindestens einem der vorangehenden Ansprüche, **dadurch gekennzeichnet, dass** die Calciumcarbonat-Teilchen durch ein Verfahren erhältlich sind, bei welchem man das Reaktionsprodukt abtrennt und bei einer Temperatur im Bereich von 150°C bis 220°C trocknet.

**13.** Verwendung von amorphem Calciumcarbonat nach mindestens einem der Ansprüche 1 bis 12 als Additiv oder Modifizierungsmittel in Papier, Farben, Kunststoffen, Tinten, Klebstoffen und Pharmazeutika.

**14.** Polymer-Compound, enthaltend amorphes Calciumcarbonat nach mindestens einem der Ansprüche 1 bis 12.

**15.** Polymer- Compound nach Anspruch 14, enthaltend, jeweils bezogen auf sein Gesamtvolumen, 99,9 Vol.-% bis 50,0 Vol.-% mindestens eines Polymers und 0,1 Vol.-% bis 50,0 Vol.-% kugelförmige Calciumcarbonat-Teilchen.

**16.** Polymer- Compound nach Anspruch 14 oder 15, enthaltend mindestens ein thermoplastisch verarbeitbares Polymer.

**17.** Polymer- Compound nach Anspruch 14, 15 oder 16, enthaltend Polyethylen, Polypropylen, Polystyrol und/oder Polymilchsäure.

**Claims**

**1.** Spherical calcium carbonate particles with a mean particle diameter in the range from 0.05 $\mu$m to 1.75 $\mu$m and a water content of at most 5.0 % by weight, in relation to the total weight of said particles, **characterised in that**

- the proportion of crystalline calcium carbonate is less than 90 % by weight and
- the calcium carbonate particles are obtainable by a method in which

i) calcium chloride is reacted in aqueous solution with dialkyl carbonate in the presence of an alkali metal hydroxide, wherein the components are used in the following concentrations:

a) $CaCl_2$: 15 mmol/l to 45 mmol/l;
b) dialkyl carbonate: 15 mmol/l to 45 mmol/l;
c) alkali metal hydroxide: 20 mmol/l to 50 mmol/l

ii) the obtained product is separated and dried.

**2.** The calcium carbonate particles according to claim 1, **characterised in that** the calcium carbonate particles have a water content of at most 1.0 % by weight, in relation to the total weight of said particles.

**3.** The calcium carbonate particles according to claim 1 or 2, **characterised in that** at least 90.0 % by weight of all the calcium carbonate particles have a particle size in the range from mean particle diameter -30 % to mean particle diameter +30 %.

4. The calcium carbonate particles according to at least one of the preceding claims, **characterised in that** the quotient of the minimum particle diameter and the maximum particle diameter is greater than 0.90 for at least 90 % of all the particles.

5. The calcium carbonate particles according to at least one of the preceding claims, **characterised in that** the proportion of crystalline calcium carbonate, in relation to the total weight of said particles, is less than 50 % by weight.

6. The calcium carbonate particles according to claim 5, **characterised in that** the calcium carbonate particles have a particle size less than 50 nm.

7. The calcium carbonate particles according to at least one of the preceding claims, **characterised in that** the calcium carbonate particles have a specific surface area in the range from 2 m$^2$/g to 20 m$^2$/g.

8. The calcium carbonate particles according to at least one of the preceding claims, **characterised in that** the calcium carbonate particles are obtainable by a method in which the molar ratio of calcium chloride to alkali metal hydroxide in the reaction mixture is selected to be greater than 0.5:1.

9. The calcium carbonate particles according to at least one of the preceding claims, **characterised in that** the calcium carbonate particles are obtainable by a method in which the molar ratio of calcium chloride to dialkyl carbonate in the reaction mixture is selected to be in the range from 0.9:1.5 to 1.1:1.

10. The calcium carbonate particles according to at least one of the preceding claims, **characterised in that** the calcium carbonate particles are obtainable by a method in which the reaction is carried out at a temperature in the range from 15 °C to 30 °C.

11. The calcium carbonate particles according to at least one of the preceding claims, **characterised in that** the calcium carbonate particles are obtainable by a method in which dimethyl carbonate is used as dialkyl carbonate and sodium hydroxide is used as alkali metal hydroxide.

12. The calcium carbonate particles according to at least one of the preceding claims, **characterised in that** the calcium carbonate particles are obtainable by a method in which the reaction product is separated and dried at a temperature in the range from 150 °C to 220 °C.

13. Use of amorphous calcium carbonate according to at least one of claims 1 to 12 as additive or modifier in paper, dyes, plastics, inks, adhesives and pharmaceuticals.

14. A polymer compound, containing amorphous calcium carbonate according to at least one of claims 1 to 12.

15. The polymer compound according to claim 14, containing, in each case in relation to the total volume of said compound, 99.9 vol. % to 50.0 vol. % of at least one polymer and 0.1 vol. % to 50.0 vol. % of spherical calcium carbonate particles.

16. The polymer compound according to claim 14 or 15, containing at least one thermoplastically processable polymer.

17. The polymer compound according to claim 14, 15 or 16, containing polyethylene, polypropylene, polystyrene and/or polylactic acid.

**Revendications**

1. Particules de carbonate de calcium sphériques dont le diamètre de particule moyen est compris entre 0,05 $\mu$m et 1,75 $\mu$m et dont la teneur en eau est inférieure ou égal à 5,0 % en poids, par rapport à leur poids total, **caractérisées en ce que**

   - la proportion de carbonate de calcium cristallin est inférieure à 90 % en poids, et

- les particules de carbonate de calcium peuvent être obtenues par un procédé dans lequel on

i) fait réagir du chlorure de calcium avec un carbonate de dialkyle en présence d'un hydroxyde de métal alcalin dans une solution aqueuse, les composants étant mis en oeuvre dans les concentrations suivantes :

a) $CaCl_2$ : 15 mmol/l à 45 mmol/l ;
b) carbonate de dialkyle : 15 mmol/l à 45 mmol/l ;
c) hydroxyde de métal alcalin : 20 mmol/l à 50 mmol/l

ii) sépare puis sèche le produit obtenu.

2. Particules de carbonate de calcium selon la revendication 1, **caractérisées en ce que** les particules de carbonate de calcium présentent une teneur en eau inférieure ou égale à 1,0 % en poids, par rapport au poids total.

3. Particules de carbonate de calcium selon les revendications 1 ou 2, **caractérisées en ce qu'**au moins 90,0 % en poids de l'ensemble des particules de carbonate de calcium présentent une taille de particule comprise entre le diamètre de particule moyen -30 % et le diamètre de particule moyen +30 %.

4. Particules de carbonate de calcium selon l'une au moins des revendications précédentes, **caractérisées en ce que**, pour au moins 90 % de l'ensemble des particules, le quotient entre le diamètre de particule minimal et le diamètre de particule maximal est supérieur à 0,90.

5. Particules de carbonate de calcium selon l'une au moins des revendications précédentes, **caractérisées en ce que** la proportion de carbonate de calcium cristallin est inférieure à 50 % en poids, par rapport à leur poids total.

6. Particules de carbonate de calcium selon la revendication 5, **caractérisées en ce que** les cristaux de carbonate de calcium présentent une taille de particule inférieure à 50 nm.

7. Particules de carbonate de calcium selon l'une au moins des revendications précédentes, **caractérisées en ce que** les particules de carbonate de calcium présentent une surface spécifique comprise entre 2 $m^2$/g et 20 $m^2$/g.

8. Particules de carbonate de calcium selon l'une au moins des revendications précédentes, **caractérisées en ce que** les particules de carbonate de calcium peuvent être obtenues par un procédé dans lequel on choisit le rapport molaire entre le chlorure de calcium et l'hydroxyde de métal au sein du mélange réactionnel de manière à ce qu'il soit supérieur à 0,5 : 1.

9. Particules de carbonate de calcium selon l'une au moins des revendications précédentes, **caractérisées en ce que** les particules de carbonate de calcium peuvent être obtenues par un procédé dans lequel on choisit le rapport molaire entre le chlorure de calcium et le carbonate de dialkyle au sein du mélange réactionnel de manière à ce qu'il soit compris entre 0,9 : 1,5 et 1,1 : 1.

10. Particules de carbonate de calcium selon l'une au moins des revendications précédentes, **caractérisées en ce que** les particules de carbonate de calcium peuvent être obtenues par un procédé dans lequel on met en oeuvre la réaction à une température comprise entre 15 °C et 30 °C.

11. Particules de carbonate de calcium selon l'une au moins des revendications précédentes, **caractérisées en ce que** les particules de carbonate de calcium peuvent être obtenues par un procédé dans lequel on met en oeuvre le carbonate de diméthyle en tant que carbonate de dialkyle et l'hydroxyde de sodium en tant qu'hydroxyde de métal alcalin.

12. Particules de carbonate de calcium selon l'une au moins des revendications précédentes, **caractérisées en ce que** les particules de carbonate de calcium peuvent être obtenues par un procédé dans lequel on sépare le produit de réaction puis on le sèche à une température comprise entre 150 °C et 220 °C.

13. Utilisation de carbonate de calcium amorphe selon l'une au moins des revendications 1 à 12 en tant qu'additif ou agent de modification dans du papier, des peintures, des matières plastiques, des encres, des adhésifs et des produits pharmaceutiques.

**14.** Formulation complète de polymère, contenant du carbonate de calcium amorphe selon l'une des revendications 1 à 12.

**15.** Formulation complète de polymère selon la revendication 14, contenant 99,9 % en volume à 50,0 % en volume d'au moins un polymère et 0,1 % en volume à 50,0 % en volume de particules de carbonate de calcium sphériques, les indications se rapportant à son volume total.

**16.** Formulation complète de polymère selon les revendications 14 ou 15, contenant au moins un polymère pouvant être transformé de manière thermoplastique.

**17.** Formulation complète de polymère selon les revendications 14, 15 ou 16, contenant du polyéthylène, du polypropylène, du polystyrène et/ou de l'acide polylactique.

Fig. 1 REM-Aufnahmen von Calciumcarbonat-Teilchen, die mit einer Calciumchlorid-Konzentration (Dimethylcarbonat-Konzentration) von 20 mM, 40 mM, 60mM oder 80 mM und einer Natriumhydroxid-Konzentration von 20 mM in der Reaktionsmischung erhalten wurden.

Fig. 2 FTIR-Spektren von Calciumcarbonat-Teilchen, die mit einer Calciumchlorid-Konzentration (Dimethylcarbonat-Konzentration) von 20 mM, 40 mM oder 60mM und einer Natriumhydroxid-Konzentration von 20 mM in der Reaktionsmischung erhalten wurden: (A) Spektrum 1 Tag nach der Synthese; (B) Spektrum derselben Probe 1 Woche nach der Synthese

Fig. 3 Röngtenbeugungsbilder von Calciumcarbonat-Teilchen, die mit einer Calciumchlorid-Konzentration (Dimethylcarbonat-Konzentration) von 40 mM oder 60mM und einer Natriumhydroxid-Konzentration von 20 mM in der Reaktionsmischung erhalten wurden; für Calcit zu erwartende Brag-Reflexionen (feste Linien); für Vaterit zu erwartende Brag-Reflexionen (gestrichelte Linien)

Fig. 4 REM-Aufnahmen von Calciumcarbonat-Teilchen in Abhängigkeit von der Calciumchlorid-Konzentration (Dimethylcarbonat-Konzentration) und der Basenkonzentration in der Reaktionsmischung

Fig. 5 DSC-Kurven von Calciumcarbonat-Teilchen in Abhängigkeit von der Calciumchlorid-Konzentration (Dimethylcarbonat-Konzentration) und der Basenkonzentration in der Reaktionsmischung Fig. 6 Röngtenbeugungsbild von den Calciumcarbonat-Teilchen „20-30", die bei 200°C

für 6 h getrocknet wurden; für Calcit zu erwartende Brag-Reflexionen (feste Linien); für

Vaterit zu erwartende Brag-Reflexionen (gestrichelte Linien)

Fig. 7 REM-Aufnahmen von (A) Calciumcarbonat-Teilchen „20-30" nach 6 h Trocknung bei 200°C und (B) von Precarb 400

Fig. 8 REM-Aufnahmen von (A) LLPPE, gefüllt mit 10 Vol.-% getrockneten Calciumcarbonat-Teilchen „20-30"; (B) PS, gefüllt mit 40 Vol.-% getrockneten Calciumcarbonat-Teilchen „20-30"

Fig. 8 REM-Aufnahmen von (C) PP, gefüllt mit 40 Vol.-% getrockneten Calciumcarbonat-Teilchen „20-30"; (B) PP, gefüllt mit 40 Vol.-% Precarb 400

Fig. 8 REM-Aufnahmen von (E) PLA, gefüllt mit 20 Vol.-% getrockneten Calciumcarbonat-Teilchen „20-30"; (F) PP, gefüllt mit 20 Vol.-% Precarb 400

Fig. 9 Zug-Dehnungskurven von mit 10 Vol.-% Füllstoff gefüllten Polymeren; DACC 20-30 = getrocknete Calciumcarbonat-Teilchen „20-30"

Fig. 10 Komplexe Viskosität in Abhängigkeit von der Frequenz von (A) LLDPE und (B) HDPE mit und ohne Füllstoff

Fig. 11 Speichermodul G' und Verlustmodul G'' in Abhängigkeit von der Frequenz von (C) LLDPE und (D) HDPE mit und ohne Füllstoff; G' – schwarze Symbole; G'' – weiße Symbole

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. FAATZ.** Kontrollierte Fällung von amorphem Calciumcarbonat durch homogene Carbonatfreisetzung. *Dissertation,* 2005